# EUROPEAN PATENT APPLICATION

(11) **EP 0 901 063 A2**
(43) Date of publication of application: **10.03.1999**
(21) Application number: 98307138.2
(22) Date of filing: 04.09.1998
(51) Int. Cl.: G06F 1/26, G06F 1/32

(54) **Power management methods**

(30) Priority: 05.09.1997 US 57991 P
(71) Applicant: TEXAS INSTRUMENTS INCORPORATED, Dallas Texas 75265 (US)
(72) Inventor: Walsh, James J., Plano, Texas 75093 (US)
(74) Representative: Legg, Cyrus James Grahame

(57) **Abstract**

In a method embodiment, there are steps (160) to operate a microprocessor having at least one counter located on the microprocessor. The method operates functional circuitry on the microprocessor over a plurality of clock cycles. This operation causes an on-chip activity to occur at least once during the plurality of clock cycles. The method also advances a count in the at least one counter in response to each incidence of the on-chip activity. After this advancement of the count, the method predicts (164) the busyness of the microprocessor in response to the count in the counter. Finally, the method selectively adjusts power consumption (168) of the microprocessor in response to a comparison of the predicted busyness with a threshold.

## Description

The present embodiments relate to power management in computers, and are more particularly directed to microprocessor circuits, systems, and methods for adjusting microprocessor power consumption in response to on-chip activity.

As computer systems advance in development, various techniques are evolving to produce more power efficient machines. For example, in the instance of portable computers such as laptops and notebook computers, it is desirable to improve power efficiency so that the rechargeable power supply lasts a greater amount of time between recharge periods. Therefore, various techniques have arisen to reduce power consumption in these types of computers, particularly during periods of reduced activity or non-use, such as when the user has not operated the keyboard for a particular amount of time. Power consumption techniques also arise in the context of desktop computers. For example, many users prefer to leave their computers turned on during lengthy periods of non-use, and even overnight for purposes of serving other computers, convenience, receiving facsimile transmissions, or simply to avoid a lengthy boot-up procedure upon returning to the computer the next day. During these periods of non-use, power reduction is also beneficial. Lastly, the combination of portable computers and desktop computers in so-called docking bay configurations also benefits from power adjustments, particularly in instances where the portable computer is removed from the dock, thereby changing the power consumption considerations. These varying configurations each may benefit from improved power performance.

One current approach to power reduction in computer systems is directed to operations of devices peripheral to the central processing unit ("CPU") of the system. In these systems, often power is reduced or eliminated to one or more of the peripherals during periods of detected non-use of the peripheral. For example, under the current WINDOWS 95 operating system, a user may input a time period in connection with the computer monitor, and when the monitor remains idle (i.e., the display it depicts remains unchanged) for that period of time, one or more control signals are issued to the monitor so that it enters a reduced power state. Thereafter, when activity with respect to the monitor commences (i.e., an action is taken which should be manifested by a change in the image displayed by the monitor), then again one or more control signals are issued to the monitor, but here to return the monitor to its fully operational state. Note further that the monitor is merely used by way of example, while the reduction of power to other peripherals is known in the art.

Another current approach to power reduction in computer systems is directed to operations of the actual CPU of the system. Under this approach, again the activity of peripherals, or lack of such activity, is used to predict system burden and control power considerations. In these systems, power consumption of the CPU is reduced rather than reducing power to the peripheral(s). Typically, such a reduction occurs by identifying a manifestation of low peripheral activity and, in response, predicting that less than full CPU activity is required. Based on this prediction, power is reduced to the CPU by reducing its clock frequency such as through the use of an external clock circuit providing the clock signal to the CPU.

Note that the prior art approaches described above suffer from various drawbacks. For example, systems which reduce power only to system peripherals may be ignoring one of the more major power consumers, namely, the CPU. In other words, the CPU may be one of the major, if not the largest, consumer of power in the system. Moreover, those power savings systems which are directed to the CPU by reducing its power also suffer drawbacks. For example, if the prediction of inactivity is too aggressive or is improper, then the CPU functionality may be reduced at a time when higher CPU operability is desired or necessary. Indeed, this may lead to software compatibility problems because some software may fail if it does not receive enough computing time. Thus, one skilled in the art will appreciate that reducing the CPU clock speed to consequently reduce power consumption during such a time may result in such a software failure. As another drawback, note that improper or inefficient power reduction may cause user frustration. In response, in systems where power controls are user-alterable, the user may disable the power consumption feature in its entirety. This action therefore actually increases net overall power consumption by disabling the feature which could otherwise reduce power consumption during at least some periods of CPU inactivity.

In view of the foregoing, there arises a need to improve upon the prior art and provide a system for more accurately reducing computer system power consumption while reducing the drawbacks set forth above.

An illustrative embodiment of the present invention seeks to provide a method for operating a microprocessor that avoids or minimizes above-mentioned problems.

Aspects of the invention are specified in the claims. In carrying out principles of the present invention, a method includes steps to operate a microprocessor having at least one counter located on the microprocessor. The method operates functional circuitry on the microprocessor over a plurality of clock cycles. This operation causes an on-chip activity to occur at least once during the plurality of clock cycles. The method also advances a count in the at least one counter in response to each incidence of the on-chip activity during the plurality of clock cycles. After this advancement of the count, the method predicts the busyness of the microprocessor in response to the count in the counter. Finally, the method selectively adjusts power consumption of the microprocessor in response to a comparison of the predicted busyness with a threshold. Other circuits, systems, and methods are also disclosed and claimed.
For a better understanding of the present invention, reference will now be made, by way of example, to the accompanying drawings, in which:
Figure 1 illustrates an electrical block diagram of a microprocessor in which the preferred embodiment may be implemented;
Figure 2 illustrates an electrical block and functional diagram of clock generation and control circuitry 120 of Figure 1; and
Figure 3 illustrates a flow chart of the preferred method steps of operation of clock generation and control circuitry 120 of Figure 2.

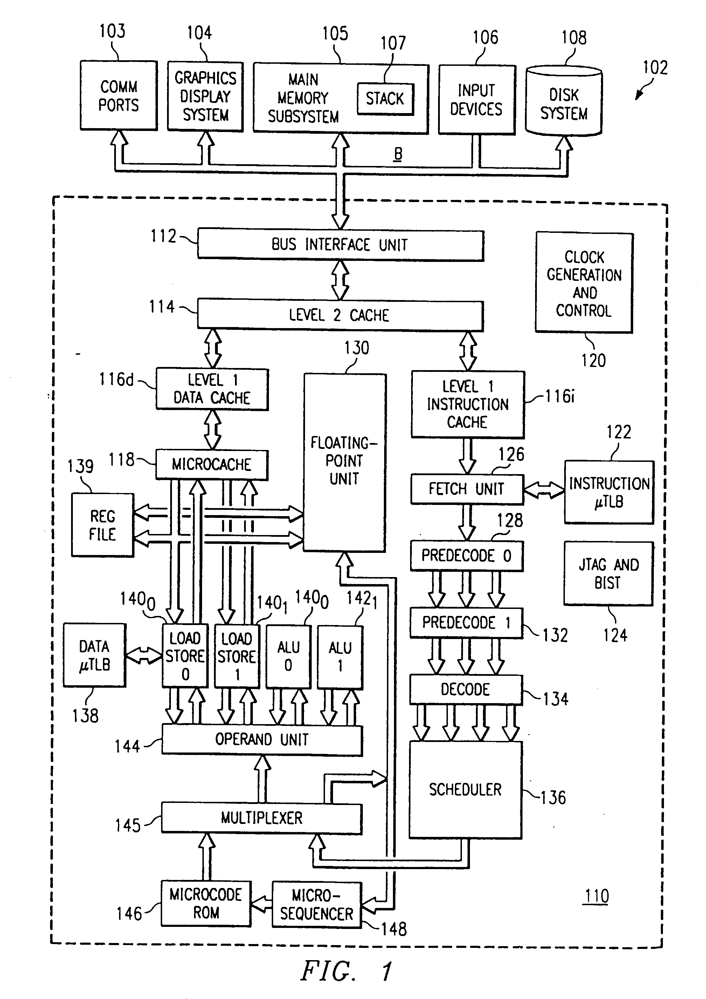

Referring to Figure 1, an exemplary data processing system 102, including an exemplary superscalar pipelined microprocessor 110 within which the preferred embodiment is implemented, is described. The following discussion first overviews system 102 and given the understanding derived from that overview, then addresses the context of improving power consumption within system 102 by reducing power consumption of microprocessor 110. Note also that it is to be understood that the architecture of system 102 and of microprocessor 110 is described herein by way of example only, as it is contemplated that the present embodiments may be utilized in microprocessors of various architectures. It is therefore contemplated that one of ordinary skill in the art, having reference to this specification, will be readily able to implement the present embodiments in such other microprocessor architectures. It is further contemplated that the present embodiments may be realized in single-chip microprocessors with the manufacture of such integrated circuits accomplished according to silicon substrate, silicon-on-insulator, gallium arsenide, and other manufacturing technologies, and using MOS, CMOS, bipolar, BiCMOS, or other device implementations.

Microprocessor 110, as shown in Figure 1, is connected to other system devices by way of bus B. While bus B, in this example, is shown as a single bus, it is of course contemplated that bus B may represent multiple buses having different speeds and protocols, as is known in conventional computers utilizing the PCI local bus architecture; thus, bus B is illustrated as a single bus here merely by way of example and for its simplicity. System 102 contains such conventional subsystems as communication ports 103 (including modem ports and modems, network interfaces, and the like), graphics display system 104 (including video memory, video processors, a graphics monitor), main memory system 105 which is typically implemented by way of dynamic random access memory (DRAM) and includes a stack 107, input devices 106 (including keyboard, a pointing device, and the interface circuitry therefor), and disk system 108 (which may include hard disk drives, floppy disk drives, and CD-ROM drives). It is therefore contemplated that system 102 of Figure 1 corresponds to a conventional desktop computer or workstation, as are now common in the art. Of course, other system implementations of microprocessor 110 (e.g., portable-type computing devices) can also benefit from the present embodiments, as will be recognized by those of ordinary skill in the art.

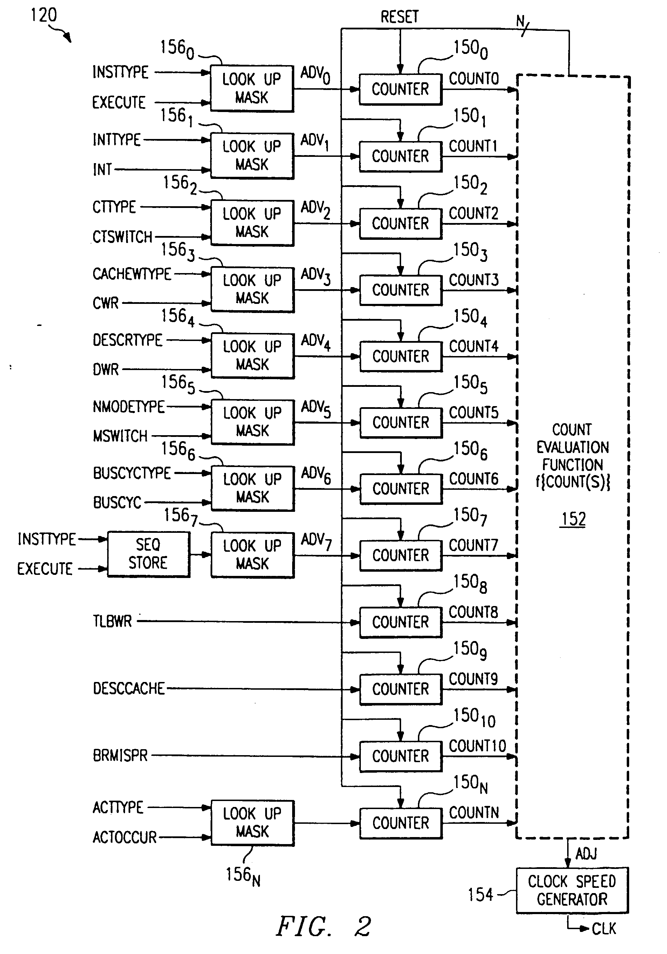

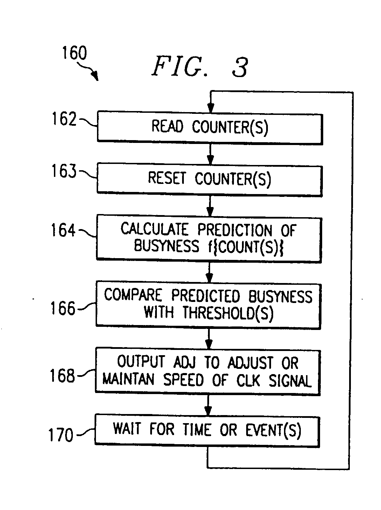

Microprocessor 110 includes a bus interface unit ("BIU") 112 that is connected to bus B, and which controls and accomplishes communication between microprocessor 110 and the other elements in system 102. BIU 112 includes the appropriate control and clock circuitry to perform this function, including write buffers for improving throughput and including timing circuitry so as to synchronize the results of internal microprocessor operation with bus B timing constraints. Microprocessor 110 also includes clock generation and control circuitry 120 which, in this exemplary microprocessor 110, generates internal clock phases; the frequency of the internal clock phases, in this example, may be selectably programmed as a multiple of the frequency of the input clock. Additionally, as detailed later in connection with Figures 2 and 3, clock generation and control circuitry 120 in the preferred embodiment is operable to alter the system clock frequency for microprocessor 110 to reduce power consumption during periods of perceived low microprocessor on-chip activity.

As is evident in Figure 1, microprocessor 110 has three levels of internal cache memory, with the highest of these as level 2 cache 114, which is connected to BIU 112. In this example, level 2 cache 114 is a unified cache, and is configured to receive all cacheable data and cacheable instructions from bus B via BIU 112, such that much of the bus traffic presented by microprocessor 110 is accomplished via level 2 cache 114. Of course, microprocessor 110 may also accomplish bus traffic around level 2 cache 114 by treating certain bus reads and writes as "not cacheable". Level 2 cache 114, as shown in Figure 1, is connected to two level 1 caches 116; level 1 data cache 116_{d} is dedicated to data, while level 1 instruction cache 116ᵢ is dedicated to instructions. Power consumption by microprocessor 110 is minimized by accessing level 2 cache 114 only in the event of cache misses of the appropriate one of the level 1 caches 116. Furthermore, on the data side, microcache 118 is provided as a level 0 cache, which in this example is a fully dual-ported cache.

As shown in Figure 1 and as noted above, microprocessor 110 is of the superscalar type. In this example multiple execution units are provided within microprocessor 110, allowing up to four instructions to be simultaneously executed in parallel for a single instruction pointer entry. These execution units include two ALUs 142₀, 142₁ for processing conditional branch, integer, and logical operations, floating-point unit (FPU) 130, two load-store units 140₀, 140₁, and microsequencer 148. The two load-store units 140 utilize the two ports to microcache 118, for true parallel access thereto, and also perform load and store operations to registers in register file 139, as well as to the level 1 caches 116_{d} and 116ᵢ. Data microtranslation lookaside buffer (µTLB) 138 is provided to translate logical data addresses into physical addresses, in the conventional manner.

The multiple execution units are controlled by way of multiple pipelines with seven stages each, with write back, which in some architectures may be thought of as an eighth stage which also may be referred to as instruction graduation. The pipeline stages are as follows:

| | |
|---|---|
| F | Fetch: This stage generates the instruction address and reads the instruction from the instruction cache or memory |
| PD0 | Predecode stage 0: This stage determines the length and starting position of up to three fetched x86-type instructions |
| PD1 | Predecode stage 1: This stage extracts the x86 instruction bytes and recodes them into fixed length format for decode |
| DC | Decode: This stage translates the x86 instructions into atomic operations (AOps) |
| SC | Schedule: This stage assigns up to four AOps to the appropriate execution units |
| OP | Operand: This stage retrieves the register and/or memory operands indicated by the AOps |
| EX | Execute: This stage runs the execution units according to the AOps and the retrieved operands |
| WB | Write back: This stage stores the results of the execution in registers or in memory |

Referring back to Figure 1, the pipeline stages noted above are performed by various functional circuitry blocks within microprocessor 110. Fetch unit 126 generates instruction addresses from the instruction pointer, by way of instruction micro-translation lookaside buffer (µTLB) 122, which translates the logical instruction address to a physical address in the conventional way, for application to level 1 instruction cache 116ᵢ. Instruction cache 116ᵢ produces a stream of instruction data to fetch unit 126, which in turn provides the instruction code to the predecode stages in the desired sequence.

Predecoding of the instructions is broken into two parts in microprocessor 110, namely, predecode 0 stage 128 and predecode 1 stage 132. These two stages operate as separate pipeline stages, and together operate to locate up to three x86 instructions and apply the same to decoder 134. As such, the predecode stage of the pipeline in microprocessor 110 is three instructions wide. Predecode 0 unit 128, as noted above, determines the size and position of as many as three x86 instructions (which, of course, are variable length), and as such consists of three instruction recognizers; predecode 1 unit 132 recodes the multi-byte instructions into a fixed-length format, to facilitate decoding.

Decode unit 134, in this example, contains four instruction decoders, each capable of receiving a fixed length x86 instruction from predecode 1 unit 132 and producing from one to three atomic operations (AOps); AOps are substantially equivalent to RISC instructions. Three of the four decoders operate in parallel, placing up to nine AOps into the decode queue at the output of decode unit 134 to await scheduling; the fourth decoder is reserved for special cases. Scheduler 136 reads up to four AOps from the decode queue at the output of decode unit 134, and assigns these AOps to the appropriate execution units. In addition, the operand unit 144 receives and prepares the operands for execution. As indicated in Figure 1, operand unit 144 receives an input from scheduler 136 and also from microcode ROM 148, via multiplexer 145, and fetches register operands, and/or memory operands via load/store units 140₀ and or 140₁, for use in the execution of the instructions. In addition, according to this example, operand unit 144 performs operand forwarding to send results to registers that are ready to be stored, and also performs address generation for AOps of the load and store type.

Microsequencer 148, in combination with microcode ROM 146, controls ALUs 142 and load/store units 140 in the execution of microcode entry AOps, which are generally the last AOps to execute in a cycle. In this example, microsequencer 148 sequences through microinstructions stored in microcode ROM 146 to accomplish this control for those microcoded microinstructions. Examples of microcoded microinstructions include, for microprocessor 110, complex or rarely-used x86 instructions, x86 instructions that modify segment or control registers, handling of exceptions and interrupts, and multicycle instructions (such as REP instructions, and instructions that PUSH and POP all registers).

Microprocessor 110 also includes circuitry 124 for controlling the operation of JTAG scan testing, and of certain built-in self-test functions, ensuring the validity of the operation of microprocessor 110 upon completion of manufacturing, and upon resets and other events.

Figure 2 illustrates a block and functional diagram of clock generation and control circuitry 120 from Figure 1 in greater detail. In the preferred embodiment, clock generation and control circuitry 120 includes a plurality of counters which, in Figure 2, are generally indicated by the reference numeral 150, and where the identifier for each different counter is combined with a subscript so as to distinguish it from other ones of the counters. Thus, Figure 2 specifically illustrates counters 1500 through 150_{N}, and as demonstrated below N may be any integer number so as to accomplish the preferred functionality of those counters. Each of counters 150₀ through 150_{N} is preferably a saturatable binary counter, meaning it may be reset to an initial value and then advance on a binary scale from the initial value toward some limit, where reaching that limit effectively "saturates" the counter. In other words, once the limit is reached, the count no longer advances until the counter is either reset or advanced in an opposite direction away from the limit, both of which are discussed later. Also discussed later is the manner of determining the specific limit for each of counters 1500 through 150_{N}. Note also that it is stated that the count for each of the counters advances from the reset value, meaning the count functionality may be achieved by the count from a relatively low number at reset toward a larger number, or vice versa. For simplification purposes, from this point forward the counting function is often discussed in the context of a reset to a zero count, and then an advancement from that zero value to a larger number which represents the saturating limit for the counter. Lastly, note that counters 150₀ through 150_{N} may be constructed as standard digital registers, and are preferably located in the machine specific register ("MSR") space of microprocessor 110.

Each of counters 1500 through 150_{N} produces a corresponding count designated as COUNT0 through COUNTN in Figure 2. The count values are readable by a count evaluation function block 152. In other words, since the counters are part of the MSR space, then those values are readily available for further processing operations based on those values. In this regard, in the preferred embodiment count evaluation function block 152 is actually performed by software programming of microprocessor 110 and, therefore, the block is shown with dashed lines in Figure 2. In other words, the functionality of block 152, as detailed later, is accomplished by executing software and such execution is accomplished using the components of microprocessor 110 as shown in Figure 1. In an alternative embodiment, block 152 may be achieved by including additional hardware within microprocessor 110. In any event, and as detailed below in connection with Figure 3, the functionality of block 152 evaluates one or more of the count values COUNT0 through COUNTN and based on that evaluation provides an adjustment signal ADJ to a clock speed generator 154. Moreover, in an alternative implementation also discussed below, block 152 may further receive and evaluate counter values from counters external from microprocessor 110 in addition to those (or a subset of those) located on microprocessor 110.

Clock speed generator 154 may be constructed according to principles known in the art, and operates to output the clock signal (abbreviated as CLK on Figure 2) to the various clocked circuits of microprocessor 110. In other words, generator 154 provides what is often referred to as a system clock signal. Thus, the speed of the CLK signal represents the general speed of operation of microprocessor 110. In the preferred embodiment, the speed of the CLK signal is alterable in response to the ADJ signal from count evaluation function block 152. Thus, for reasons appreciated later, the level of ADJ (which could be either analog or digital) operates to either maintain, increase, or decrease the speed of the CLK signal, thereby affecting the overall speed of operation of microprocessor 110. Note that the preceding discussion mentions the "speed" of operation rather than its frequency. In particular, it is contemplated within the present inventive scope that clock speed generator 154 be constructed in whatever fashion desirable to give rise to the ability to adjust microprocessor operation speed and, hence, to consequently adjust the power consumption of the microprocessor in response to the change in operational speed. For example, one of at least two techniques may be implemented to adjust microprocessor speed. As a first technique, the duty cycle of a general digital signal may be altered to provide the CLK signal and thereby adjust the speed of microprocessor operation. In this approach, a digital periodic signal is provided, but various transitions of that signal are gated off so that only the remaining transitions are presented by the system CLK signal. Thus, while the frequency of the general digital signal remains unchanged, the actual CLK signal used to operate the microprocessor circuitry provides fewer transitions because other transitions are gated off. In such an approach, however, there may be additional considerations required when removing the gate and allowing the CLK signal to increase in speed due to some instabilities in the first few transitions following gate removal. As a second technique, the actual frequency of the CLK signal may be reduced, although this technique may require more complex circuitry than the first technique described immediately above.

Each of counters 150₀ through 150_{N} is related to a different type of microprocessor activity, where that activity is manifested by one or more internal operations of the functional circuitry on microprocessor 110 (otherwise referred to herein as "on-chip" activity). The activity corresponding to each of the counters is detailed below. However, to better demonstrate the intended scope and operation by way of example, the activity with respect to counter 150₀ is now described. The count of counter 150₀ is generally related to the execution of instructions. In general, therefore, and as further modified by statements below, it is desirable for counter 150₀ to advance each time an instruction is executed. More particularly, corresponding to counter 150₀ are two inputs signals, which actually are coupled first to a look up mask block 156₀ for reasons described later. The first of the input signals, INSTTYPE, identifies the type(s) of instruction being executed by the execution units (i.e., ALUs 142₀, 142₁, FPU 130, load-store units 140₀, 140₁, and microsequencer 148) in a given cycle of operation. Note that the INSTTYPE signal may be one or more bits as chosen for the particular implementation, where multiple bits are likely if it is desired to distinguish various types of instruction from one another. Further, this same multiple bit concept may apply to other identifying types of signal associated with other counters discussed below. The second of the input signals, EXECUTE, is a control signal which is asserted each time one or more of the execution units are operated in a given clock cycle.

The operation of the inputs signals INSTTYPE and EXECUTE in connection with counter 150₀ are as follows. EXECUTE is asserted when the corresponding functional circuitry (i.e., the execution units) on microprocessor 110 operates during a clock cycle. At this time, and in response to the assertions of EXECUTE, the type of instruction being executed is submitted by the INSTTYPE signal to look up mask block 156₀. Recall that microprocessor 110 is preferably a superscalar device and, therefore, by definition it may execute more than one instruction in a given clock cycle. Thus, one or more instruction types may be executed at one time, and either in this case or in the case of a non-superscalar microprocessor the identity of the instruction(s) is provided to look up mask block 156₀ by INSTTYPE. In response, look up mask block 156₀ determines if any of the one or more instructions are to affect the value of counter 150₀. In other words, look up mask block 156₀ is preferably pre-programmed to mask certain instructions such that they do not affect the advancement of counter 150₀, while other instructions do indeed affect the advancement of counter 150₀. For example, assume that look up mask block 156₀ is pre-programmed to mask any instance of an instruction INST1 from affecting the count of counter 150₀, but is not pre-programmed to mask any instance of an instruction INST2 from affecting the count of counter 150₀. Assume also in a given cycle of operation of microprocessor 110 that both instructions INST1 and INST2 are executed. Thus, the INSTTYPE signal inputs values identifying both INST1 and INST2 to look up mask block 156₀. In response, look up mask block 156₀ masks any effect that INST1 may otherwise have on the count of counter 150₀; to the contrary, mask block 156₀ does not mask the effect of INST2. Specifically, look up mask block 156₀ asserts a corresponding advance signal ADV₀ to counter 150₀, thereby causing the latter to increment (i.e., to advance) once corresponding to the execution of instruction INST2. Given the connections and operational description of counter 150₀ and its associated signals and circuitry, one skilled in the art will therefore appreciate that over time (i.e., between periods where counter 150₀ is reset as detailed later), the count of counter 150₀ reflects the recent execution of those instructions which are not masked by look up mask block 156₀. Having presented the example of counter 150₀, below are discussed various other microprocessor activities and their corresponding counters and circuitry, where once again it should be appreciated by one skilled in the art that a given counter will advance in response to recent incidences of the activity corresponding to that counter.

The activity associated with counter 150₁ relates to microprocessor interrupts as instigated by some type of on-chip action as opposed to certain types of interrupts which arise due to a signal being asserted, externally from the microprocessor, to an interrupt pin on the microprocessor. By way of example of the types of interrupts associated with counter 150₁, some interrupts occur in response to a specific instruction (e.g., an interrupt instruction). Still further, other interrupts contemplated within the present scope include what are known in the art as exceptions, such as a page fault by way of example. In any event, associated with counter 150₁ in the preferred embodiment is a look up mask block 156₁, which receives two input signals INTTYPE and INT, and like look up mask block 156₀ provides an advancement signal ADV₁ to its corresponding counter (i.e., counter 150₁). More particularly, the INTTYPE signal identifies the type of a given interrupt which is occurring or has just occurred during the relevant clock cycle. The INT signal is asserted to indicate the occurrence of the on-chip interrupt and to enable the comparison functionality of look up mask block 156₁. In other words, when INT is asserted, look up mask block 156₁ compares the indication or value of INTTYPE with any pre-programmed values to determine if the interrupt at issue is to affect the count in counter 150₁ If no mask is present for the identified interrupt, then counter 150₁ is advanced by asserting ADV₁, thereby indicating a recent occurrence of the interrupt. To the contrary, if the particular interrupt is to be masked as determined by look up mask block 156₁, then the ADV₁ signal is not asserted and, therefore, the interrupt at issue does not affect the count in counter 150₁.

The activity associated with counter 150₂ relates to either or both of microprocessor context switching and microprocessor task switching. As known in the art, both types of switching typically are manifested when certain registers (e.g., general purpose registers) are activated to output to storage the value(s) relating to the current context or task and then to input value(s) relating to the context or task to which the microprocessor is to be switched. In other words, the switch occurs where operations are taken by the microprocessor to quit one context or task to commence another. Typically, task switching relates to a change in the application program to be run during a given instant in a multi-tasking environment, whereas context switching is more broadly defined to include any switch of CPU state context such as when initiating an interrupt service routine. Additionally, associated with counter 150₂ in the preferred embodiment is a look up mask block 156₂, which receives two input signals CTTYPE and CTSWITCH, and once more look up mask block 156₂ provides an advancement signal ADV₂ to its corresponding counter (i.e., counter 150₂). More particularly, the CTTYPE signal identifies the type of context or task to which the microprocessor is to switch, and the CTSWITCH signal is asserted to indicate an occurrence of the context switch or task switch and to enable the comparison functionality of look up mask block 156₂. In response to the CTSWITCH signal, therefore, look up mask block 156₂ compares the value of the CTTYPE signal with any pre-programmed values to determine if the context switch or task switch at issue is to affect the count in counter 150₂. Moreover, in a more complex embodiment, the functionality of look up mask block 156₂ is based on a combination of both the context or task to which the microprocessor is switching and the context or task from which it is switching, rather than only considering the context or task to which the microprocessor is switching. In this more complex case, mask block 156₂ is further coupled to receive some indication of the present context or task. In either case, if no mask is present for the identified context or task information, then counter 150₂ is advanced by asserting ADV₂, thereby indicating a recent occurrence of the context or task switch. To the contrary, if the context or task switch is to be masked as determined by look up mask block 156₂, then the ADV₂ signal is not asserted and, therefore, the context or task switch at issue does not affect the count in counter 150₂. Lastly, note that while Figure 2 illustrates a single counter directed to both context and task switching, in an alternative embodiment separate counters (and corresponding look up mask blocks) could be used, with one directed to context switching and another directed to task switching.

The activity associated with counter 150₃ relates to microprocessor cache writes. Recall from Figure 1 that microprocessor 110 generally includes three cache structures, namely, level 1 cache 116 (which includes data cache 116_{d} and instruction cache 116ᵢ), level 2 cache 114, and microcache 118. Given these structures, any one or more of these on-chip caches provides an activity for possible advancement of counter 150₃. More particularly, associated with counter 150₃ in the preferred embodiment is a look up mask block 156₃, which receives two input signals CACHEWTYPE and CWR, and look up mask block 156₃ provides an advancement signal ADV₃ to corresponding counter 150₃. Note that the CACHEWTYPE signal may in one embodiment identify to which of the caches the current write is directed. As a further level of consideration giving rise to an alternative embodiment, note further that the CACHEWTYPE signal may further encode the type of write for a given cache. For example, in the cache write art, there are various types of writes such as a write allocate or a write causing a victim writeback. In any event, the CWR signal is asserted to indicate an occurrence of some type of cache write to an on-chip cache, thereby enabling the comparison functionality of look up mask block 156₃. In response to the CWR signal, look up mask block 156₃ compares the value of the CACHEWTYPE signal with any pre-programmed values to determine if the write is to affect the count in counter 150₃. If no mask is present for the identified write, then counter 150₃ is advanced by asserting ADV₃, thereby indicating a recent occurrence of the cache write. To the contrary, if the particular cache write is to be masked as determined by look up mask block 156₃, then the ADV₃ signal is not asserted and, therefore, the cache write at issue does not affect the count in counter 150₃.

The activity associated with counter 150₄ relates to microprocessor descriptor loads. More specifically, in the 80x86 art, descriptors are data blocks, typically eight bytes long, which describe a segment (e.g., system segment or application segment) or a gate. During various operations, these descriptors are modified by way of a load to the descriptor which is commonly stored in a descriptor register. Accordingly, yet another aspect of the preferred embodiment is to have such descriptor loads provide the possibility of advancing counter 150₄. Also included in the preferred embodiment is a look up mask block 156₄ which receives two input signals DESCRTYPE and DWR, and is associated with counter 150₄ Further, look up mask block 156₄ provides an advancement signal ADV₄ to corresponding counter 150₄. Thus, the DWR signal is asserted to indicate an occurrence of some type of descriptor load, thereby enabling the comparison functionality of look up mask block 156₄. In response to the DWR signal, look up mask block 156₄ compares the value of the DESCRTYPE signal with any pre-programmed values to determine if the load is to affect the count in counter 150₄ If no mask is present for the identified descriptor load, then counter 150₄ is advanced by asserting ADV₄, thereby indicating a recent occurrence of the descriptor load. To the contrary, if the particular descriptor load is to be masked as determined by look up mask block 156₄, then the ADV₄ signal is not asserted and, therefore, the descriptor load at issue does not affect the count in counter 1504.

The activity associated with counter 150₅ relates to microprocessor mode switching. Again as known in the 80x86 art, mode switching occurs typically to accommodate either protection features as well as compatibility issues for past and present software. For example, the current state of the art in 80x86 microprocessors permits switches between modes such as 16 bit protected mode, 32 bit protected mode, V86 mode, and real mode. Further, associated with counter 150₅ in the preferred embodiment is a look up mask block 156₅, which receives two input signals NMODETYPE and MSWITCH, where look up mask block 156₅ like others above provides an advancement signal ADV₅ to its corresponding counter 150₅. The NMODETYPE signal identifies the type of mode to which the microprocessor is to switch, and the MSWITCH signal is asserted to indicate an occurrence of the mode switch and to enable the comparison functionality of look up mask block 156₅. In response to the MSWITCH signal, therefore, look up mask block 156₅ compares the value of the NMODETYPE signal with any pre-programmed values to determine if the mode switch at issue is to affect the count in counter 150₅. Again, in a more complex embodiment, the functionality of look up mask block 156₅ is based on a combination of both the mode to which the microprocessor is switching and the mode from which it is switching, rather than only considering the mode to which the microprocessor is switching. In this more complex case, mask block 156₅ is further coupled to receive some indication of the present mode of operation. As an example of this more complex scenario, therefore, look up mask block 156₅ could be pre-programmed to mask from the count a switch from 16 bit protected mode to 32 bit protected mode, but not to mask a switch from real mode to 32 bit protected mode. Thus, in the example both switches are to the same mode (i.e., 32 bit protected mode) yet only one advances the count due to the combined considerations of the mode of the microprocessor before and after the mode switch. In any event, if no mask for the current switch information is present, then counter 150₅ is advanced by asserting ADV₅, thereby indicating a recent occurrence of the mode switch. To the contrary, if the mode switch at issue is to be masked as determined by look up mask block 156₅, then the ADV₅ signal is not asserted and, therefore, the mode switch at issue does not affect the count in counter 150₅.

The activity associated with counter 150₆ relates to microprocessor bus cycles (or "bus transactions") relating to bus B of Figure 1. It is known in the microprocessor art that different types of bus cycles may occur along a microprocessor bus. For example, bus cycles may include a memory read, a memory write, a burst memory cycle, and still others. In this regard in the preferred embodiment a look up mask block 156₆ receives two input signals BUSCYCTYPE and BUSCYC associated with counter 150₆. Look up mask block 156₆ provides an advancement signal ADV₆ to corresponding counter 150₆. The BUSCYC signal is asserted to indicate an occurrence of some type of bus cycle, thereby enabling the comparison functionality of look up mask block 156₆. In response to the BUSCYC signal, look up mask block 156₆ compares the type of bus cycle at issue, as indicated by the value of the BUSCYCTYPE signal, with any pre-programmed values to determine if the cycle is to affect the count in counter 150₆. If no mask is present for the identified bus cycle, then counter 150₆ is advanced by asserting ADV₆, thereby indicating a recent occurrence of the given type of bus cycle. To the contrary, if the particular bus cycle is to be masked as determined by look up mask block 156₆, then the ADV₆ signal is not asserted and, therefore, the current bus cycle does not affect the count in counter 150₆.

Having detailed the activities and connections with counters 150₀ through 150₆, note now that counter 150_{N} is included to demonstrate that one or more other on-chip activities likewise could be used either in lieu of, or in addition to, any of the activities described above. Thus, in a general sense, this additional activity or activities is representative of the operation of some type of on-chip functional circuitry of microprocessor 110, and could affect the counts of corresponding counters. Moreover, this additional activity or activities could be filtered through the use of a comparable look up mask block, as shown by look up mask block 156_{N} in Figure 2. Consequently, and in a manner comparable to the many circuits described above, look up mask block 156_{N} provides an advancement signal ADV_{N} to corresponding counter 150_{N}, again by comparing the activity type at issue (as encoded by ACTTYPE) in response to assertion of the ACTOCCUR signal which indicates that the activity is occurring in the present clock cycle of operation of the microprocessor. Once again, therefore, the count in counter 150_{N} may selectively advance based on whether look up mask block 156_{N} includes a mask for the then occurring activity. Lastly, in addition to the count inputs to count evaluation function block 152 as described above, the preferred embodiment may include any one or more of the additionally illustrated counters 150₇ through 150₁₀, each of which is described below.

The activity associated with counter 150₇ is comparable in some respects to that of counter 150₀, but applies to the execution of a sequence of instructions rather than an individual instruction. More particularly, note in connection with counter 150₇ that the INSTTYPE and EXECUTE signals used in connection with counter 50₀ are once again used as inputs, but here they are first connected to a sequence storage block 158. In the preferred embodiment, sequence storage block 158 is operable to store a record of the past M instructions in the sequence of instructions as executed by microprocessor 110. Thus, assuming that the sequence of the instructions passing through the microprocessor pipeline may be discerned from the INSTTYPE signal, then each time EXECUTE is asserted sequence storage block 158 updates its list of M instructions to include the most recently executed instructions. In an out-of-order context, one skilled in the art will appreciate that additional input and/or control may be necessary to accomplish this function. In all events, given a functionality of sequence storage block 158 to identify the sequence of the past M instructions which were executed by microprocessor 110, it then outputs an identifier of this sequence, shown as SEQ in Figure 2. The SEQ identifier indicates that the past M instructions include a given sequence of instructions, either formed by the M instructions in their entirety or as a subset of those instructions. The SEQ signal is input to a look up mask block 156₇ which operates in a fashion similar to like circuitry described above. Thus, in response to the EXECUTE signal, look up mask block 156₇ compares the SEQ value with any pre-programmed values to determine if the identified instruction sequence is to affect the count in counter 150₇. If no mask is present for the identified instruction sequence, then counter 150₇ is advanced by asserting ADV₇, thereby indicating a recent occurrence of the instruction sequence. On the other hand, if the particular instruction sequence is to be masked as determined by look up mask block 156₇, then the ADV₇ signal is not asserted and, therefore, the current instruction sequence does not affect the count in counter 150₇.

The remaining counters 150₈ through 150₁₀ represent yet additional on-chip activities which may be separately counted in the preferred embodiment, but which do not necessarily also work in conjunction with corresponding look up mask blocks as is preferably the case for the activities discussed above. Briefly examining the activities of counters 150₈ through 150₁₀, counter 150₈ is advanced in response to an occurrence of a hit in a translation lookaside buffer ("TLB"). In the preferred embodiment, such a hit may be in either one or both of data µTLB 138 or instruction µTLB 122, or still additional levels of TLBs as included on the microprocessor integrated circuit. Recall from earlier, and as known in the art, these devices permit a preliminary access to address translations from a cache like structure rather than having to perform a possible table walk in memory to translate a virtual address to a physical address. Thus, a write to one of these TLBs, as manifested by an assertion of the TLBWR signal, preferably advances counter 150₈. In a similar manner, counter 150₉ is advanced when a descriptor cache register located on the microprocessor integrated circuit is written. Thus, a write to one of the descriptor cache registers, as manifested by an assertion of the DESCCACHE signal, preferably advances counter 150₉. Lastly, it is contemplated that microprocessor 110 includes speculative instruction fetching based on branch prediction, where various techniques of such speculative activity are known or will be ascertainable by one skilled in the art. Given such technology, it is known to include a signal, commonly derived from the execution unit of the microprocessor, which is asserted once it is discovered that a speculative instruction fetch has resulted in a mispredicted branch. In the preferred embodiment, this signal is either copied directly as, or provokes assertion of, the BRMISPR signal as directed to counter 150₁₀. Thus, each assertion of the BRMISPR signal preferably advances counter 150₁₀. Also in the context of mispredicted branches, note further that activities other than the actual instruction execution may indicate a mispredicted branch, such as a return stack write or a branch target buffer ("BTB") write. Thus, these additional activities also may be counted by including their occurrences as assertions of the BRMISPR signal.

Figure 3 illustrates a flowchart of the preferred method 160 of operation of count evaluation function block 152 from Figure 2. At the outset, recall that count evaluation function block 152 is preferably implemented in software as executed by circuitry within microprocessor 110. Thus, the software may reside in various fashions as known in the art, such as on external storage from microprocessor 110 or on firmware included within the integrated circuit (e.g., microcode ROM 146). In any event, the preferred steps of method 160 commence at step 162. Step 162 reads the values of one or more of counters 150₀ through 150_{N}. In this regard, and as further appreciated later, note that various embodiments within the present inventive scope may be created by including only one or more counters 150₀ through 150_{N} and, in such an approach, only the counts in those subset of counters are available for reading in step 162. Still further, regardless of the number of on-chip activity counts available, step 162 could be altered by one skilled in the art to selectively read only some of those counters in some instances, while still others in other instances. As yet another modification, while Figures 1 and 2 are directed to a single microprocessor with counters reflecting on-chip activity for that circuit, the methodology of Figure 3 may be further enhanced in a system where other off-chip counters are also available for reading by step 162 to provide an indication of off-chip activities to be combined with the information provided by one or more of the on-chip counters. Once the desired counts are read in step 162, method 160 continues to step 163.

In step 163, count evaluation function block 152 asserts the RESET signal to each of counters 150₀ through 150_{N} (or whatever activity measuring counters are implemented for a given embodiment). As suggested by its name, the assertion in this manner of the RESET signal causes each counter to reset to its initial value (e.g., zero). Thus, following this resetting step, each of the affected counters may once again commence counting its corresponding on-chip activity (or off-chip activity if an off-chip counter is also implemented and assuming it is reset at the same time). Note therefore that the counter reset is preferably immediately after, or in response to, the act of reading the counter as discussed with respect to step 162, above. In any event, having reset the counters, for a future iteration of step 162, that is, where it is later once again desired to read the value of the counters, a new count is available for each reset counter. Next, method 160 continues to step 164.

Step 164 calculates a prediction of CPU busyness based on the amount of on-chip activity of microprocessor 110 as manifested by the counts read from step 162. In other words, given the preceding teachings, one skilled in the art will now appreciate that more advanced counts for the various counters will give rise to a prediction of a higher incidence of the activity corresponding to those counts. For example, if counter 150₀ is advanced by incrementing each time any instruction is executed, then a relatively large count in that counter indicates that the on-chip activity of microprocessor instruction execution has been relatively frequent since the last time counter 150₀ was reset and further gives rise to a prediction of how busy microprocessor 110 will be until the next time the counter is read (i.e., a prediction of future on-chip busyness). Naturally, this concept applies also to the other counts as well. Given this information, step 164 is able to consider the various counts to develop a prediction for how busy microprocessor 110 will be until the next time the relevant counters were reset. In this regard, note that the particular methodology for considering the various counts, such as which counts to consider, possible weights of certain counts, and the significance of the relative values of each count, may be selected by one skilled in the art. For example, if counter 156₄ indicates a high incidence of descriptor cache writes then the importance of branch mispredictions (as evidenced by the counts in counter 150₁₀) is preferably less significant, whereas if the incidence of descriptor cache writes is low then a high count of branch mispredictions is likely very important to a prediction of future microprocessor busyness. In any event, step 166 performs some type of analytical function on one or more of the counts (shown as "f{COUNT(S)}" in Figure 3), where that function may be deterministic or adaptive in nature. Moreover, the actual function implemented in step 164 may depend on various attributes of the actual microprocessor in which the present embodiment is implemented, and further could be adjusted based on the system environment in which the microprocessor is used. In any event, note that the actual function and significance attributed to the individual counts may be selected and modified by a person skilled in the art, and preferably when completed reaches some type of result as reflected by a final calculated number. Once this number is ascertained, method 160 continues to step 166.

Step 166 compares the result of the function from step 164 to one or more thresholds, where the threshold(s) indicates a quantity which if reached represents a prediction that there will be a certain amount of on-chip activity occurring within microprocessor 110. Note that the threshold(s) may be fixed, or preferably are programmable such as by having values which may be written to registers located on the microprocessor. In this regard, note further that where programmable threshold(s) are used, they may be dynamically alterable such that some functionality, which preferably is a task independent from method 160, updates the threshold value(s) from time to time so that each time step 166 occurs it may actually involve one or more different threshold values.

Step 168 determines whether an adjustment is necessary to the CLK signal speed based on the step 164 prediction of microprocessor busyness and the comparison or comparisons of step 166. For example, if a single threshold is used in step 166, then step 168 may respond based on whether the predicted busyness value is either above or below the single threshold (with, of course, an appropriate result also being reached if the predicted busyness value actually equals the single threshold). On the other hand, if multiple thresholds are used in step 166, then based on a comparison of the calculated busyness value to each threshold, a determination may be made as to appropriate clock speed for the microprocessor based on the comparison. As a fairly simplistic example, therefore assume that step 166 implements four thresholds, and assume further that the calculated busyness value is greater than the smaller two thresholds but less than the larger two thresholds. Thus, it may be concluded that it is desired for microprocessor 110 to thereafter operate at one-half of its maximum capable clock speed. Given this approach or still others as will be ascertainable by one skilled in the art, in step 168 count evaluation function block 152 outputs a value of the ADJ signal to clock speed generator 154 so as to either increase, decrease, or not change the speed of the CLK signal. In response, one skilled in the art will appreciate that the ADJ signal therefore may adjust the speed of operation of microprocessor 110 based on the predicted microprocessor busyness. Naturally, in the event that microprocessor operation speed is reduced, then at the same time there is a reduction in the amount of power consumed by microprocessor 110. Summarizing the effect of method 160 to this point, therefore, step 168 accomplishes a selective power adjustment by microprocessor 110 in response to predicting the anticipated busyness of it based on its recent on-chip activity. Thereafter, method 160 continues to step 170.

Step 170 represents a wait period before method 160 may return to step 162 to once more read the appropriate counts and again proceed with the next determination of the on-chip activity in microprocessor 110. Note that step 170 may be accomplished in various manners giving rise to different embodiments. As a first embodiment, method 170 may be accomplished by waiting for a predetermined amount of time, where that time may be measured by counting clock cycles. In this regard, note further that it may be preferred to further compensate given the value of the ADJ signal. Specifically, if it is known from step 168 that the speed of the CLK signal has been reduced, then for a given amount of time fewer clock transitions will occur than if the CLK signal has not been reduced. Thus, if it is desired to accomplish the wait state of step 170 based on the passage of an absolute amount of time, then the required number of clock cycles which must elapse to reach that time will be relatively smaller if the speed of the CLK signal has been reduced in response to the ADJ signal. As another consideration, however, if the speed of the CLK signal is reduced by gating a general digital signal as described above, then it is likely that the general digital signal is also available for counting so as to measure the passage of time. As a second embodiment, step 170 may count clock cycles regardless of the then current speed (as reflected by the CLK signal). As a third embodiment, step 170 may await a certain event or events, where it desired that such an event then triggers the repetition of the method starting at step 162. In this last approach, note that the awaited event may be some type of interrupt routine, that is, an instruction or event which actually interrupts the operation of microprocessor 110 and in effects requests that method 160 repeat commencing with step 162. For example, a separate timer could be included within microprocessor 110 which, when reaching its timeout limit, requests the interrupt which instigates the steps of method 160. In any event, one skilled in the art will appreciate that method 160 is preferably repeated during the operation of microprocessor 110 and, during such repetition monitors the on-chip activity and responds in the manner set forth above.

Having presented various approaches with the inventive scope of the present embodiments, note the considerations with respect to setting the limit of counts for counters 150₀ through 150_{N}. As discussed above, the counts for each of these counters advances in response to each incidence of a given activity (i.e., assuming that activity is not masked from affecting its corresponding counter). As a first counter consideration, one skilled in the art should now appreciate the effect of setting the saturatable limit of each counter. Particularly, if a given counter reflects the incidence of a given activity, and that incidence at some point is indicative of sufficient busyness of microprocessor 110, then there is no need to allow the count of that counter to exceed this point. Accordingly, for each activity monitored by a counter, one skilled in the art will be able to ascertain the number of occurrences for that activity, given the expected period of the wait state of step 170, which represents a sufficient busyness of microprocessor 110. Thus, the given counter may be configured to saturate at that number. Thereafter, once the count reaches that number, which is read by step 162, it may be recognized by the function of step 164 to indicate sufficient microprocessor activity so as not to reduce the clock speed of the microprocessor. In addition to the above, note further that an alternative embodiment may be achieved using counter limits which are not intended to saturate; in other words, during a given cycle the count is expected to advance but not to reach any limit. In this regard, note that some microprocessors may include counters which advance for certain performance evaluations not directed to power consumption. As such, the count from these counters may be reviewed consistent with the present teachings to perform a power reduction aspect for the microprocessor.

Another consideration with respect to the counters implemented consistent with the present embodiments is directed to having counters which advance in both directions. More particularly, the above description focuses on counters which advance only in a single direction (e.g., incrementing from zero toward a limit) between successive resets of the counter, where advancement occurs in response to successive incidences of a given activity. In an alternative embodiment, however, it may be desirable to have a counter advance in opposite directions based on whether its corresponding activity is occurring. In one such approach, a counter advances in a first direction (e.g., incrementing) for each clock cycle when its corresponding activity occurs, but advances in a second and opposite direction (e.g., decrementing) for each clock cycle when its corresponding activity does not occur. Indeed, in this alternative approach, still another aspect contemplated within the inventive scope is to have the counter increment linearly in one direction and on a logarithmic basis in the other direction as is sometimes used in the counter art but in manners unrelated to reducing microprocessor power consumption based on on-chip busyness. In this alternative approach, the counter preferably advances linearly toward its saturatable limit for each occurrence of the activity but advances in a logarithmic manner away from the saturatable limit for each non-occurrence of the activity. Note the effect of such an approach may be desirable for the following reasons. Assume that a given activity has occurred quite frequently since the last reset of its corresponding counter. Intuitively, therefore, the counter is going to tend toward a result which suggests not reducing the clock speed of microprocessor 110. Assume now during that same cycle (i.e., between resets of the counter) that the activity becomes less frequent toward the end of the cycle. If the counter decrements linearly, then it may soon indicate a count which suggests it is desirable to reduce the clock speed of microprocessor 110. However, since it may be undesirable to take such an action prematurely, the alternative of decrementing the counter in a logarithmic fashion reduces the effect of the non-occurrences relative to the occurrences of the activity and, thus, reduces the likelihood that microprocessor 110 will prematurely receive a reduced CLK signal speed. Given the two different bases for advancing a counter, note as an alternative that they may be switched such that the counter advances in a logarithmic manner toward its saturatable limit for each occurrence of the activity but advances linearly away from the saturatable limit for each non-occurrence of the activity. Lastly, note further in an embodiment where the counters are permitted to advance in both directions that method 160 may be further modified such that the reset only occurs at a single time. In other words, if the counters are permitted to show a lack of activity over time by slowing decrementing (or otherwise advancing in a direction opposite of that which is taken when the activity occurs), then the counters do not necessarily require multiple resetting events since the decrementing count will approximate the effect of a reset if a given activity does not occur over a sufficient amount of time. Thus, a one time reset could suffice in this approach, and the one time reset could occur at system start-up or some other time as chosen by one skilled in the art.

Still another consideration with respect to the counters and consistent with the present embodiments is directed to mixing the activities associated with a single counter. In other words, the above description of Figure 2 demonstrates counters where each is associated with a different type of activity. Note further, however, that various on-chip activities could be combined within a single counter where an occurrence of each such activity advances the counter. As yet another alternative, note that the counter could also include some type of device comparable to sequence storage block 158 whereby a sequence of activities was stored so that only a given group or sequence of differing activities advances the corresponding counter. In the sense of a group of activities, this could be accomplished through a logical AND function of the activities as stored, so that the counter advances only if two (or more) activities occur between successive resets of the counter. In the sense of a sequence of activities, a more complex logical structure would be required which advances the counter only if two (or more) activities occur in a given sequential order, and between successive resets of the counter. Still other combinations will be ascertainable by one skilled in the art.

From the above, it may be appreciated that the above embodiments provide various structures and methodology for improving the performance of a microprocessor. For example, an integrated circuit implemented the present teachings may implement more aggressive power reduction techniques based on the myriad information available to the system from its various counters. As another example, power reduction is directed directly to the integrated circuit rather than to some peripheral, and in many instances this is highly appropriate where the integrated circuit is itself a considerable user of system power. Still other benefits will be appreciated by one skilled in the art. Still further, as another benefit note that while the present embodiments have been described in detail, various substitutions, modifications or alterations could be made to the descriptions set forth above without departing from the inventive scope. Indeed, numerous different examples have been provided in the preceding text. Another example by way of illustration is to eliminate various of the look up mask blocks described earlier, such that each incidence of a given activity advances the corresponding counter. As another example, some of the activities described earlier may be further subdivided into narrower groups of activities, each having its own corresponding counter. For example, in the context of instruction execution, a first instruction counter could advance for an execution of any floating point instruction, a second instruction counter could advance for an execution of any privileged instruction, a third instruction counter could advance for an execution of any memory access instruction, and so forth. In this regard, the increased number of counters permits the ability to further distinguish various activities and, therefore, to further refine the response (i.e., through the function of step 164) to those activities. As still another example, note that various steps in Figure 3 may be reordered and, indeed, one skilled in the art may include additional steps as well. As still another example of the flexibility of the inventive scope, it should be noted that the microprocessor of Figure 1 is provided only by way of example, and that the present teachings apply to other microprocessors as well. Thus, these examples as well as additional ones ascertainable by one skilled in the art further demonstrate the present inventive scope, which is defined by the following claims.

## Claims

1. A method of operating a microprocessor having at least one counter located on the microprocessor, the method comprising the steps of:
operating functional circuitry on the microprocessor over a plurality of clock cycles, wherein the operation may cause an on-chip activity to occur during the plurality of clock cycles;
advancing a count in the at least one counter in response to each incidence of the on-chip activity;
after the advancing step, the steps of:
predicting the busyness of the microprocessor in response to the count in the at least one counter; and
selectively adjusting power consumption of the microprocessor in response to a comparison of the predicted busyness with a threshold.

2. The method of Claim 1:
wherein the at least one counter consists of a plurality of counters;
wherein the step of operating functional circuitry on the microprocessor over a plurality of clock cycles may cause a plurality of on-chip activities to occur during the plurality of clock cycles;
and further comprising the step of, for each of the plurality of counters, advancing a count in the counter in response to an incidence of a corresponding one of the plurality of activities;
and wherein the step of predicting the busyness of the microprocessor further comprises predicting the busyness of the microprocessor in response to the counts in each of the plurality of counters.

3. The method according to any preceding Claim:
and further comprising the step of generating a type signal indicating a type of the on-chip activity; and
wherein the step of advancing a count in the at least one counter in response to each incidence of the on-chip activity comprises:
receiving the type signal into a mask circuit;
determining whether the type signal corresponds to a type of on-chip activity to be masked from affecting the count in the at least one counter; and
in response to the determining step determining that the type signal does not correspond to a type of on-chip activity to be masked from affecting the count in the at least one counter, advancing the count in the at least one counter in response to each incidence of the on-chip activity; and
in response to the determining step determining that the type signal corresponds to a type of on-chip activity to be masked from affecting the count in the at least one counter, the step of not advancing the count in the at least one counter.

4. The method according to any preceding Claim and further comprising the step of resetting the count in the at least one counter prior to the step of advancing a count in the at least one counter.

5. The method according to any preceding Claim and further comprising the step of resetting the count in the at least one counter after the step of selectively adjusting power consumption of the microprocessor.

6. The method according to any preceding Claim and further comprising, prior to the step of selectively adjusting power consumption of the microprocessor, the steps of:
reading the count in the at least one counter, wherein the step of predicting the busyness is responsive to the reading step; and
responsive to the reading step, resetting the count in the at least one counter.

7. The method according to any preceding Claim:
wherein the step of advancing a count comprises advancing the count in a first direction; and
further comprising the step of advancing the count in a second direction opposite the first direction during the plurality of clock cycles.

8. The method according to any preceding Claim wherein the step of selectively adjusting power consumption of the microprocessor in response to a comparison of the predicted busyness with a threshold comprises reducing power consumption of the microprocessor if the predicted busyness is below the threshold.

9. The method of Claim 1:
and further comprising receiving into the microprocessor a count from a counter of circuitry activity external from the microprocessor; and
wherein the step of predicting the busyness of the microprocessor in response to the count in the counter comprises predicting the busyness of the microprocessor in response to the count in the counter in combination with the count from a counter of circuitry activity external from the microprocessor.

10. The method of Claim 1:
wherein the at least one counter consists of a plurality of counters;
wherein the step of operating functional circuitry on the microprocessor over a plurality of clock cycles may cause a plurality of on-chip activities to occur during the plurality of clock cycles;
and further comprising the steps of:
for each of the plurality of counters, advancing a count in the counter in response to an incidence of a corresponding one of the plurality of activities; and
receiving into the microprocessor a count from a counter of circuitry activity external from the microprocessor; and
wherein the step of predicting the busyness of the microprocessor further comprises predicting the busyness of the microprocessor in response to the counts in each of the plurality of counters in combination with the count from the counter of circuit activity external from the microprocessor.
